# EUROPEAN PATENT APPLICATION

(11) **EP 2 832 564 A1**
(43) Date of publication of application: **04.02.2015**
(21) Application number: 13768510.3
(22) Date of filing: 25.03.2013
(51) Int. Cl.: B60H 1/32, B60H 1/22, F04B 39/12, F25B 1/00

(54) **VEHICLE AIR-CONDITIONING APPARATUS, COMPRESSION DEVICE, AND UNIT DEVICE FOR VEHICLE AIR CONDITIONING**

(30) Priority: 27.03.2012 JP 2012071029
(71) Applicant: Panasonic Corporation, Kadoma-shi, Osaka 571-8501 (JP)
(72) Inventor: NODA, Yoshitoshi, Chuo-ku Osaka 540-6207 (JP); TANIGUCHI, Katsuji, Chuo-ku Osaka 540-6207 (JP); TERADA, Tomohiro, Chuo-ku Osaka 540-6207 (JP)
(74) Representative: Schwabe - Sandmair - Marx
(86) International application number: PCT/JP2013/002025
(87) International publication number: WO 2013/145704

(57) **Abstract**

This vehicle air-conditioning device has a compressor; an outside heat exchanger; a water-to-refrigerant heat exchanger; a heat release unit; a circulation means; and an air passage through which air is blown into a vehicle interior and in which the heat release unit is disposed midway, a send-out port for sending out the compressed refrigerant and an introduction port for introducing the refrigerant that has not been compressed being provided in the compressor, a first fit part that is fitted in the send-out port of the compressor, and a second fit part that is fitted in the introduction port of the compressor being provided in the water-to-refrigerant heat exchanger, and the compressor and the water-to-refrigerant heat exchanger being integrally joined by the first fit part and the second fit part being fitted.

## Description

### Technical Field

The present invention relates to an in-vehicle air conditioning apparatus mounted in a vehicle, a compression apparatus used for an in-vehicle air conditioning apparatus, and an in-vehicle air conditioning unit apparatus.

### Background Art

Conventionally, there have been proposed several techniques that exchange heat between refrigerant of a heat pump and coolant and that perform some functions of heating or cooling operation of an air conditioning apparatus by the heated or cooled coolant (see, Patent Literature (hereinafter, abbreviated as PTL) 1 or 2, for example).

### Citation List

### Patent Literature

PTL 1
   Japanese Patent Application Laid-Open No. HEI 10-329532
PTL 2
   Japanese Patent Application Laid-Open NO. HEI 05-330331

### Summary of Invention

### Technical Problem

However, in an air conditioning system equipped with a circuit through which the refrigerant flows and a circuit through which the coolant flows, the number of components increases due to a plurality of devices causing the refrigerant to flow and a plurality of devices causing the coolant to flow. Thus, such an air conditioning system has a problem in that the system as a whole increases in size and becomes complicated in the system configuration.

Furthermore, in such an air conditioning system, a heat loss is caused by a pipe that connects between the components, and the air conditioning performance degrades as much as the heat loss, thereby preventing energy saving.

An object of the present invention is to provide an in-vehicle air conditioning apparatus capable of achieving a more compact air conditioning system that utilizes a circuit of refrigerant and a circuit of coolant, and an improvement in performance by reduction of the heat loss. Furthermore, another object of the present invention is to provide a compression apparatus and an in-vehicle air conditioning unit apparatus capable of being used for such an in-vehicle air conditioning apparatus.

### Solution to Problem

An in-vehicle air conditioning apparatus according to an aspect of the present invention includes: a compressor that compresses refrigerant of a heat pump; an outside heat exchanger that exchanges heat between the refrigerant and air outside a vehicle interior; a water-to-refrigerant heat exchanger that exchanges heat between the refrigerant and coolant by causing the refrigerant and the coolant to flow through an inside thereof; a heat radiation section that releases heat into air from the coolant by causing the coolant to flow through an inside thereof; a circulation section that circulates the coolant between the water-to-refrigerant heat exchanger and the heat radiation section; and an air passage which sends air into the vehicle interior and in which the heat radiation section is disposed in midstream of the air passage, in which the compressor includes: a send-out port that sends out the compressed refrigerant; and an introduction port that is used for introducing refrigerant before compression, and the water-to-refrigerant heat exchanger includes: a first fitting section that is fitted to the send-out port of the compressor; and a second fitting section that is fitted to the introduction port of the compressor, in which: the first fitting section includes an introduction path that is used for introducing the refrigerant sent out from the compressor into the water-to-refrigerant heat exchanger; the second fitting section includes a refrigerant passage that is connected to the introduction port of the compressor at one end of the refrigerant passage and that includes a pipe connection port at another end of the refrigerant passage; and the compressor and the water-to-refrigerant heat exchanger are integrally joined together by fitting of the first fitting section and the second fitting section.

A compression apparatus according to an aspect of the present invention includes: a compressor that compresses refrigerant; and a water-to-refrigerant heat exchanger that exchanges heat between the refrigerant and coolant by causing the refrigerant and the coolant to flow through an inside thereof, in which the water-to-refrigerant heat exchanger is disposed above the compressor and joined to the compressor, and a send-out port of the compressor for refrigerant is connected to an introduction port of the water-to-refrigerant heat exchanger for refrigerant.

An in-vehicle air conditioning unit apparatus according to an aspect of the present invention includes: a compressor that compresses refrigerant of a heat pump; a water-to-refrigerant heat exchanger that is disposed above the compressor and joined to the compressor, and that moves heat from the refrigerant to coolant by causing the coolant and the refrigerant compressed by the compressor to flow through an inside thereof; and an accumulator that supplies gas-phase refrigerant to the compressor, in which the compressor, the water-to-refrigerant heat exchanger, and the accumulator are integrated into a single unit.

### Advantageous Effects of Invention

According to the present invention, it is possible to achieve a more compact air conditioning system that utilizes a circuit of coolant and a circuit of refrigerant. Furthermore, since the pipe of the refrigerant of the compressor and the pipe of the refrigerant of the water-to-refrigerant heat exchanger are connected by a short path, it is possible to reduce the heat loss between the pipes, thereby achieving an improvement in the air conditioning performance and energy saving by the amount corresponding to the heat loss that would have occurred otherwise.

### Brief Description of Drawings

FIG. 1 is a diagram illustrating an in-vehicle air conditioning unit apparatus of Embodiment 1 of the present invention;
FIG. 2 is a schematic diagram illustrating a circuit of refrigerant and coolant of an in-vehicle air conditioning apparatus of Embodiment 1;
FIG. 3 is a diagram illustrating an air passage configuration of the in-vehicle air conditioning apparatus of Embodiment 1;
FIG. 4 is a schematic diagram illustrating a state of a cooling operation of the in-vehicle air conditioning apparatus of Embodiment 1;
FIGS. 5A and 5B are diagrams for describing effects of a solenoid valve with orifice, and FIG. 5A is a diagram illustrating an open state of the solenoid valve and FIG. 5B is a diagram illustrating a closed state of the same;
FIG. 6 is a diagram illustrating a configuration of an integrated compression apparatus according to Embodiment 1;
FIG. 7 is a perspective view illustrating a second joint portion of a water-to-refrigerant heat exchanger;
FIG. 8 is a schematic diagram illustrating a circuit of refrigerant and coolant of an in-vehicle air conditioning apparatus of Embodiment 2;
FIG. 9 is a diagram illustrating a configuration of an integrated compression apparatus of Embodiment 2;
FIG. 10 is a perspective view illustrating a configuration of a heat absorber; and
FIG. 11 is a perspective view illustrating a joint portion of a pipe of coolant.

### Description of Embodiments

Each embodiment of the present invention will be described in detail below with reference to the accompanying drawings.

### (Embodiment 1)

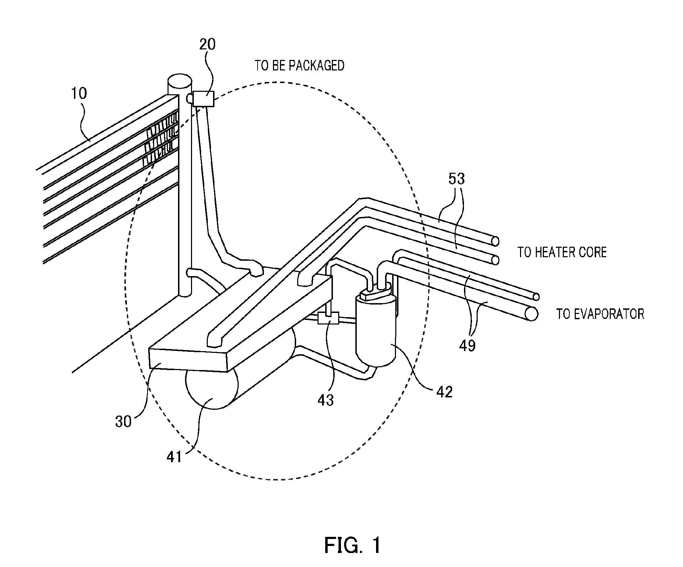

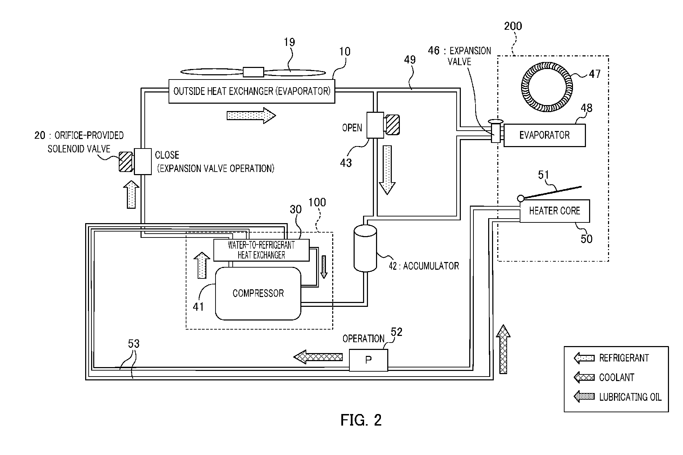

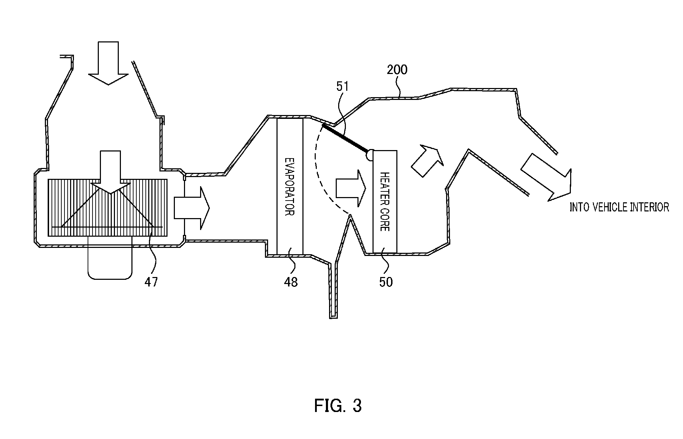

FIG. 1 is a diagram illustrating an in-vehicle air conditioning unit apparatus of Embodiment 1 of the present invention. FIG. 2 is a schematic diagram illustrating a circuit of the refrigerant and the coolant of the in-vehicle air conditioning apparatus of Embodiment 1. FIG. 3 is a diagram illustrating the air passage configuration of the in-vehicle air conditioning apparatus of Embodiment 1. FIGS. 2 and 3 illustrate a state of the heating operation.

The in-vehicle air conditioning apparatus according to Embodiment 1 of the present invention includes outside heat exchanger 10, heat exchanging fan 19, orifice-provided solenoid valve 20, water-to-refrigerant heat exchanger 30, compressor 41, accumulator 42, on-off valve 43, expansion valve 46, fan 47, evaporator 48, pipe 49 through which the refrigerant of the heat pump flows, heater core (corresponding to a heat radiation section) 50, cooling and heating switching door 51, air passage 200, coolant pump 52, and pipe 53 through which the coolant (LLC: Long Life Coolant, for example) flows.

Although the details will be described below, among these components, compressor 41 and water-to-refrigerant heat exchanger 30 are joined to each other to form integrated compression apparatus 100. Further, as illustrated in FIG. 1, integrated compression apparatus 100, accumulator 42, on-off valve 43, and pipe 49 among these components are packaged in a single unit to form a unit apparatus.

Outside heat exchanger 10 causes the refrigerant to flow through outside heat exchanger 10, and exchanges heat between the air and the refrigerant by receiving an air blast from heat exchanging fan 19 in the outside of the vehicle interior. Outside heat exchanger 10 functions as an evaporator during heating operation and allows low-pressure and low-temperature refrigerant to flow through outside heat exchanger 10, thereby providing the heat of air to the refrigerant. Meanwhile, during cooling operation, outside heat exchanger 10 functions as a condenser and allows high-pressure and high-temperature refrigerant to flow therethrough, thereby discharging the heat of the refrigerant to air.

Compressor 41 compresses the refrigerant to a high temperature and high pressure by electric driving, and sends the refrigerant to water-to-refrigerant heat exchanger 30. Compressor 41 has properties that generate heat by Joule heat and frictional heat of a drive section.

Accumulator 42 separates the refrigerant being of a mixture of liquid phase and gas phase, and supplies only the gas-phase refrigerant to compressor 41.

On-off valve 43 performs the opening and closing operation under the electric control, thereby performing switching between sending the refrigerant sent out from outside heat exchanger 10 to evaporator 48 side and to accumulator 42 without passing through evaporator 48. On-off valve 43 is opened to allow the refrigerant to flow during the heating operation, and is closed to prevent the refrigerant from flowing during the cooling operation.

Expansion valve 46 allows the refrigerant to flow during the cooling operation, and expands the high-pressure refrigerant to low temperature and low pressure and sends it to evaporator 48. Expansion valve 46 is in a state of substantially closing the flow passage when the pressure of the refrigerant is lowered. Thus, during the heating operation in which on-off valve 43 is opened, the refrigerant does not flow through expansion valve 46.

As illustrated in FIG. 3, air passage 200 is a flow passage that is used for introducing the external air, or the mixed air of the external air and the inside air from an introduction port, and sends it into the vehicle interior. Fan 47, evaporator 48, heater core 50, and cooling and heating switching door 51 are provided in air passage 200.

Fan 47 allows air to flow along air passage 200 by generating the static pressure in air passage 200.

Evaporator 48 moves the heat of air to the refrigerant, by allowing the low-temperature refrigerant to flow through evaporator 48 and by allowing the air to flow among a plurality of fin type heat radiation plates. The refrigerant does not flow through evaporator 48 during the heating operation and no action is exerted on the passing air, and meanwhile, the refrigerant flows through evaporator 48 during the cooling operation to cool the passing air.

Heater core 50 releases the heat of the coolant into the air, by allowing heated coolant to flow through heat core 50 and by allowing air to flow among the plurality of fin type heat radiation plates. Heated coolant flows through heater core 50 during the heating operation to heat the passing air. Further, since the coolant is stopped during the cooling operation, or cooling and heating switching door 51 blocks the passage of air, heater core 50 does not exert any action on the air.

As illustrated in FIG. 3, cooling and heating switching door 51 is a door that performs switching between allowing the air flowing through air passage 200 to pass through heater core 50, and causing the air to bypass heater core 50.

Orifice-provided solenoid valve 20 is a valve that can switch between operating as the expansion valve (function of allowing the refrigerant to pass after decompression) and setting the state in which the on-off valve is opened.

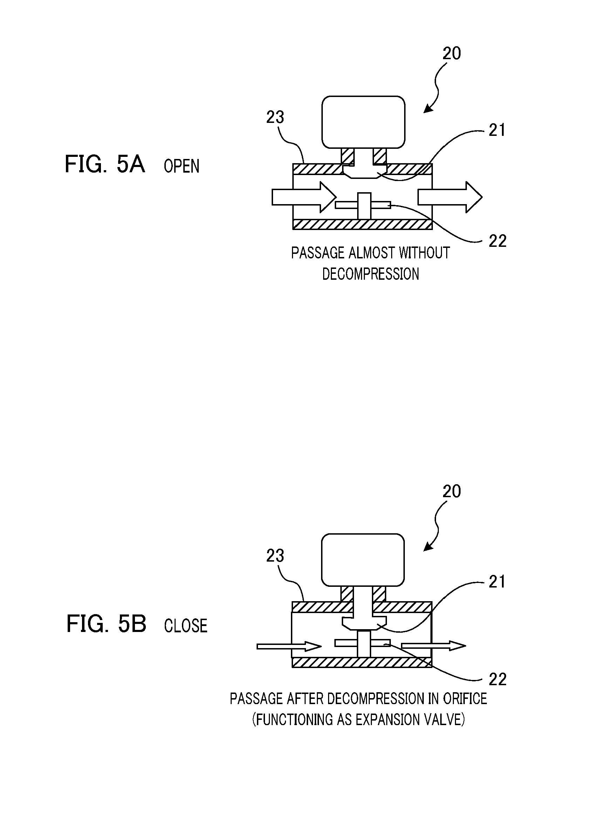

FIGS. 5A and 5B are diagrams for describing the operation of orifice-provided solenoid valve 20. FIG. 5A is a diagram illustrating an open state, and FIG. 5B is a diagram illustrating a closed state.

As illustrated in FIG. 5A, valve 21 is widely opened in the open state, and orifice-provided solenoid valve 20 allows the refrigerant to pass therethrough without substantial decompression. Meanwhile, as illustrated in FIG. 5B, orifice-provided solenoid valve 20 functions as an expansion valve that decompresses the refrigerant so that the refrigerant is decompressed after the passing the valve, by allowing the refrigerant to pass through the narrow flow passage of orifice 22 in the closed state.

Orifice-provided solenoid valve 20 introduces the refrigerant from water-to-refrigerant heat exchanger 30 and sends it out to outside heat exchanger 10. Orifice-provided solenoid valve 20 is closed during the heating operation and is opened during the cooling operation.

### [How Heating Operation Is Performed]

FIG 2 illustrates a state of the heating operation of the in-vehicle air conditioning apparatus of Embodiment 1.

During the heating operation, orifice-provided solenoid valve 20 is closed, on-off valve 43 is opened, and coolant pump 52 is activated. In addition, in air passage 200, cooling and heating switching door 51 opens the flow passage of heater core 50 side, and fan 47 is driven.

With such an action, after being compressed by compressor 41 and passing through water-to-refrigerant heat exchanger 30, the refrigerant is expanded in orifice-provided solenoid valve 20 and becomes a state of low temperature and low pressure. Low-temperature refrigerant absorbs heat from the air by passing through outside heat exchanger 10. Thereafter, the refrigerant is sent to compressor 41 via accumulator 42 through the valve 43, without flowing through evaporator 48 side.

When the refrigerant passes through water-to-refrigerant heat exchanger 30, the coolant is heated by the high-temperature and high-pressure refrigerant, and the heated coolant is sent to heater core 50 by the action of coolant pump 52.

In air passage 200, the air flowing by fan 47 is sent into the vehicle interior through evaporator 48 and heater core 50. Since the cold refrigerant does not flow through evaporator 48 and the hot coolant flows through heater core 50, the air flowing through air passage 200 is heated and sent into the vehicle interior.

### [Cooling Operation Action]

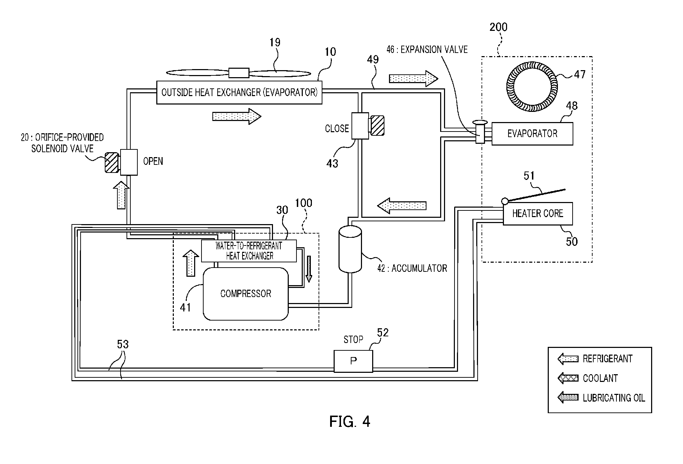

FIG. 4 is a schematic diagram illustrating a state of cooling operation of the in-vehicle air conditioning apparatus of Embodiment 1.

During the cooling operation, orifice-provided solenoid valve 20 is opened, on-off valve 43 is closed, and the coolant pump is substantially stopped. Further, in air passage 200, cooling and heating switching door 51 closes the flow passage of heater core 50 side, and fan 47 is driven.

With such an action, after being compressed by compressor 41 and passing through water-to-refrigerant heat exchanger 30, the refrigerant is sent to outside heat exchanger 10 without being decompressed by orifice-provided solenoid valve 20. Moreover, heat radiation to the air is performed in outside heat exchanger 10, and the radiated refrigerant is sent to expansion valve 46. In expansion valve 46, the radiated refrigerant is expanded to low temperature and low pressure. Next, the low-temperature and low-pressure refrigerant flows through evaporator 48 to cool the air passing through evaporator 48. Thereafter, the refrigerant is sent to compressor 41 via accumulator 42.

When the refrigerant passes through water-to-refrigerant heat exchanger 30, since the coolant does not flow, the refrigerant passes therethrough while remaining in the high-temperature and high-pressure state. Since the coolant does not flow, heater core 50 is not heated.

In air passage 200, air flowing by fan 47 is cooled by evaporator 48 and sent into the vehicle interior.

### [Configuration of Integrated Compression Apparatus 100]

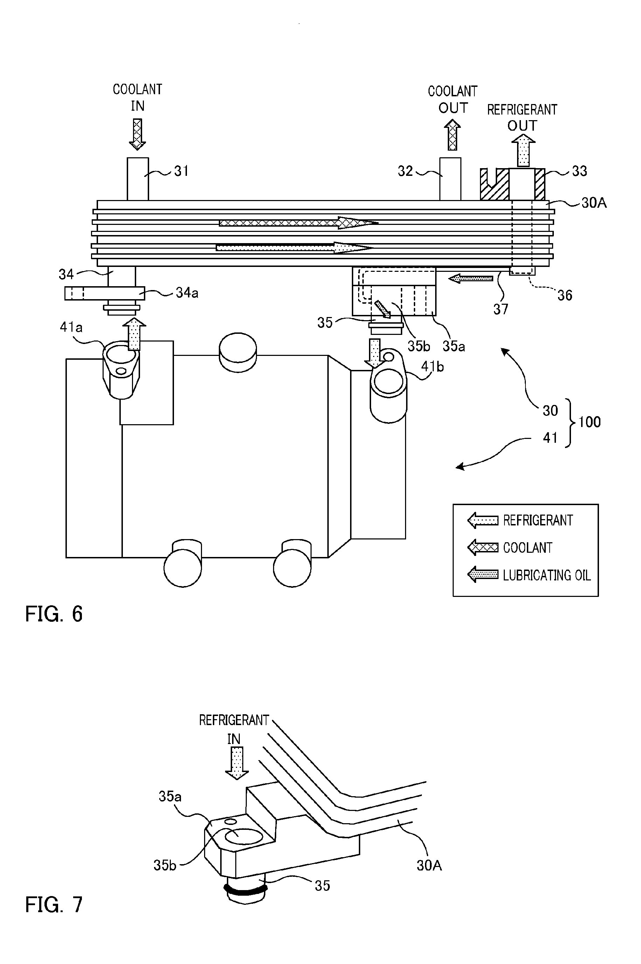

FIG. 6 is a diagram illustrating the configuration of an integrated compression apparatus of Embodiment 1, and FIG. 7 is a perspective view illustrating a second joint portion of the water-to-refrigerant heat exchanger.

Integrated compression apparatus 100 is formed by integrally jointing water-to-refrigerant heat exchanger 30 and compressor 41. Water-to-refrigerant heat exchanger 30 is fixed above compressor 41. In addition, when installing compressor 41 on the vehicle, as viewed from compressor 41, a direction of application of gravity is a downward direction, and a direction opposite to the direction is an upward direction.

Compressor 41 includes: a body in which an electric motor and a compression pump are embedded; and two joints 41a and 41b provided above the body. One joint 41a is provided with a send-out port that sends out compressed refrigerant to the outside, and the other joint 41b is provided with an introduction port that is used for introducing the uncompressed refrigerant from the outside.

Water-to-refrigerant heat exchanger 30 is provided with body section 30A having a plurality of flat flow passages stacked in a layered shape therein, a plurality of joints 31 to 35 to which pipes of the coolant or the refrigerant are connected, and thin pipe 37 for returning the lubricating oil.

Among the plurality of flat flow passages in body section 30A, half of the flat flow passages is each a flow passage through which the coolant flows, and the other half thereof is each a flow passage through which the refrigerant flows. The plurality of flow passages through which the coolant flows and the plurality of flow passages through which the refrigerant flows are alternately stacked. With a configuration, the refrigerant and the coolant flowing through the flow passages are in a state of being adjacent to each other in a wide area with a partition having high thermal conductivity interposed therebetween, so that it is possible to replace heat with high efficiency.

Among the plurality of joints 31 to 35, first joint (corresponding to a first fitting section) 34 is provided below body section 30A and connected to joint 41a of compressor 41. Joint 34 is fixed to the body of compressor 41 via fixing frame 34a at high strength. One end of a base pipe (header) configured to supply the refrigerant to the plurality of flow passages of body section 30A is opened to joint 34.

Second joint (corresponding to a second fitting section) 35 is provided below body section 30A and is connected to joint 41b of compressor 41. Joint 35 is fixed to the body of compressor 41 via fixing frame 35a at high strength. As illustrated in FIG. 7, short tubular refrigerant passage 35b is formed in joint 35 and fixing frame 35a, and one end of refrigerant passage 35b is opened to an end portion of joint 35, and the other end of refrigerant passage 35b is opened to the upper surface of fixing frame 35a. Pipe 49 of refrigerant is connected to the upper surface of fixing frame 35a, and the refrigerant is sent to compressor 41 from pipe 49 via refrigerant passage 35b.

Among the plurality of joints 31 to 35, third and fourth joints 31 and 32 are connected to pipe 53 of the coolant. One end of the base pipe configured to supply the coolant to the plurality of flow passages of body section 30A is opened to joint 31, and one end of the base pipe configured to discharge the coolant from the plurality of flow passages of body section 30A is opened to joint 32. The coolant introduced from joint 31 flows into the plurality of flow passages of body section 30A via the base pipe of the introduction side, and then is sent out from joint 32 via the base pipe of the sending-out side.

Fifth joint 33 is connected to pipe 49 of the refrigerant. Joint 33 connects one end of base pipe 36 of the sending-out side of the refrigerant to outside pipe 49.

In the example of FIG. 6, third to fifth joints 31 to 33 are provided above water-to-refrigerant heat exchanger 30, but the arrangement thereof is not particularly limited.

One end of thin pipe 37 is in communication with the bottom of base pipe 36, and the other end thereof is in communication with the middle of refrigerant passage 35b. Thin pipe 37 returns lubricating oil of compressor 41 to be mixed with the refrigerant to compressor 41. High-pressure refrigerant flows though base pipe 36, and low-pressure refrigerant flows through refrigerant passage 35b. However, since thin pipe 37 is thin and there is great fluid resistance, it is possible to return the lubricating oil flowing down below base pipe 36 to compressor 41 via refrigerant passage 35b, almost without back-flow of the refrigerant.

When the lubricating oil is mixed with the refrigerant and passes through the respective portions of the heat pump, the lubricating oil acts to slightly lower the air conditioning performance. However, in this embodiment, after most of the lubricating oil moves to water-to-refrigerant heat exchanger 30 from compressor 41, it is immediately returned to compressor 41. Accordingly, in this embodiment, it is possible to reduce the amount of lubricating oil to be mixed with the refrigerant, thereby further improving the air conditioning performance.

According to integrated compression apparatus 100 as described above, by separately providing water-to-refrigerant heat exchanger 30 and compressor 41, compared to a configuration in which these elements are connected to each other by the pipe, it is possible to provide an overall compact in-vehicle air conditioning apparatus, and therefore, installation onto the vehicle is also facilitated. Further, the heat loss in the pipe decreases, and it is possible to improve the energy efficiency, especially during the heating operation.

Further, since water-to-refrigerant heat exchanger 30 is fixed to the top of compressor 41, it is possible to suppress vibration during driving of compressor 41, thereby achieving a quiet and calm state of the in-vehicle air conditioning apparatus. Further, since water-to-refrigerant heat exchanger 30 is fixed to the top of compressor 41, it is possible to easily return the lubricating oil in the refrigerant to compressor 41.

In addition, the fixed position of water-to-refrigerant heat exchanger 30 is not limited to the top of compressor 41, and for example, water-to-refrigerant heat exchanger 30 may be integrally fixed to the bottom of compressor 41. Further, water-to-refrigerant heat exchanger 30 may be integrally fixed to the side surface of compressor 41.

By fixing the water-to-refrigerant heat exchanger to the bottom, it is possible to lower the center of gravity of integrated compression apparatus 100. The low center of gravity improves the stability during installation onto the vehicle, and thus, setting the layout during installation onto the vehicle is also facilitated. Further, by fixing the water-to-refrigerant heat exchanger to the side surface, for example, it is possible to stably install integrated compression apparatus 100 next to the fender of the vehicle. The stability of integrated compression apparatus 100 is improved by the layout, and space saving of an installation location of the air conditioning apparatus in the vehicle is achieved.

Further, according to the unit apparatus of the present embodiment in which integrated compression apparatus 100, accumulator 42, on-off valve 43, and pipe 49 among these components are formed by a single package, the following effects are obtained. That is, by adding the unit apparatus, without adding any modification to the configuration of air passage 200 provided in a conventional vehicle, it is possible to achieve an in-vehicle air conditioning apparatus capable of cooling and heating that utilizes the heat pump.

### (Embodiment 2)

Embodiment 2 is mainly different from Embodiment 1 in that Embodiment 2 includes heat absorber 60 (corresponding to the heat absorption section) that takes in heat, which has been discharged into the environment from compressor 41, into the coolant. The same configurations as those of Embodiment 1 are denoted by the same reference numerals and the detailed description thereof will not be provided.

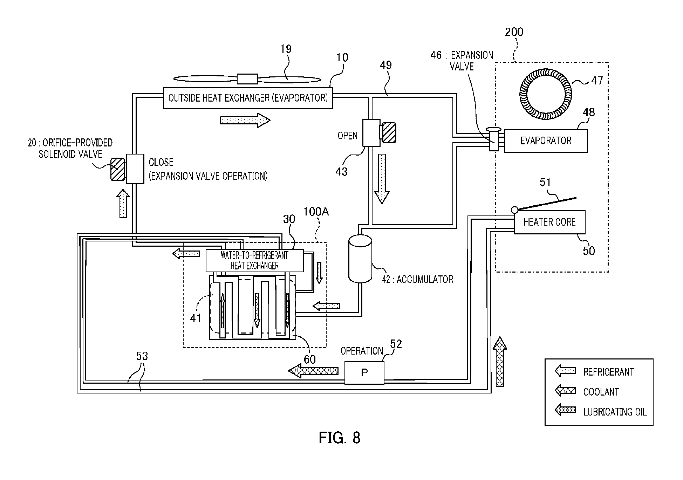

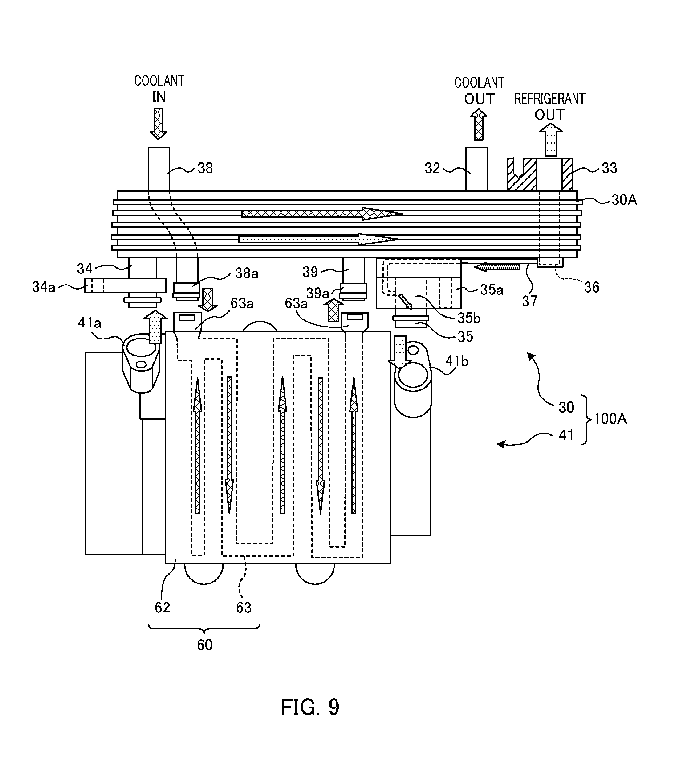

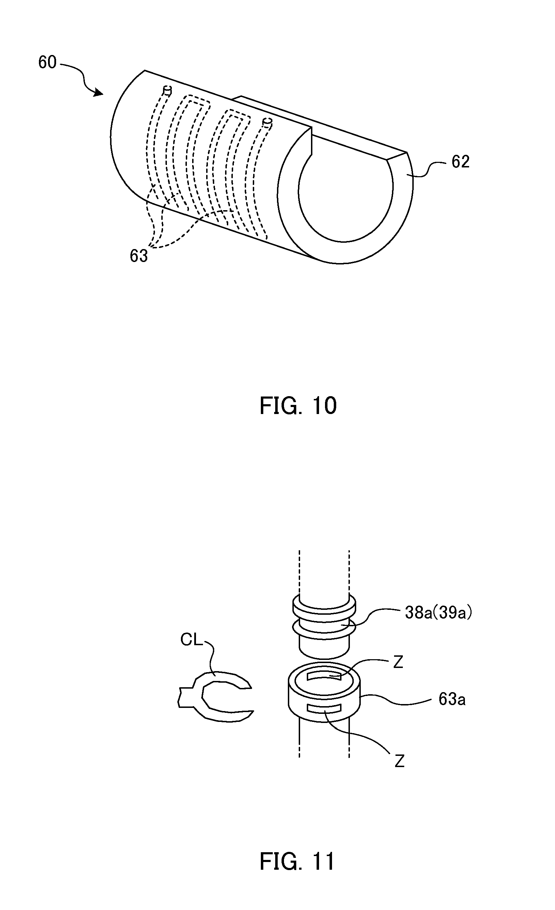

FIG. 8 is a schematic diagram illustrating a circuit of the refrigerant and the coolant of the in-vehicle air conditioning apparatus of Embodiment 2. FIG. 9 is a diagram illustrating a configuration of integrated compression apparatus 100A of Embodiment 2. FIG. 10 is a perspective view illustrating a configuration of heat absorber 60.

As illustrated in FIGS. 9 and 10, heat absorber 60 is provided with mat-like heat insulating material 62 and pipe 63 having high thermal conductivity. Pipe 63 is fixed around compressor 41 in a state of high thermal conductivity, and heat insulating material 62 covers the periphery thereof. Joints 63a are provided at both ends of pipe 63. Heat insulating material 62 includes a heat storage member and has a function of storing heat.

As illustrated in FIG. 9, intermediate pipe 38 and joint 39 are added to water-to-refrigerant heat exchanger 30.

Pipe 53 leading to coolant pump 52 is connected to one end of intermediate pipe 38, and pipe 63 of heat absorber 60 is connected to the other end thereof. Intermediate pipe 38 sends the coolant sent from coolant pump 52 to heat absorber 60 without any additional processing. Intermediate pipe 38 may be fixed to body section 30A of water-to-refrigerant heat exchanger 30 and may have a configuration separate from body section 30A.

One end of the base pipe of the coolant of body section 30A is opened to joint 39 so that the coolant introduced from joint 39 flows through the plurality of flow passages of the body section 30A via the base pipe of body section 30A.

FIG. 11 is a perspective view illustrating the joint portion of the pipe of the coolant.

As illustrated in FIG. 11, joints 38 and 39 of water-to-refrigerant heat exchanger 30 and joints 63a and 63a of heat absorber 60 are configured in an easily connectable manner, respectively. That is, by inserting joint connector 38a (or 39a) of water-to-refrigerant heat exchanger 30 into joint 63a of heat absorber 60 and by plugging clip CL into groove z of joint 63a, clip CL is locked in joint connector 38a (or 39a) of water-to-refrigerant heat exchanger 30, and both elements are locked so as not to fall out.

As illustrated in FIG. 8, in Embodiment 2, the coolant is circulated among water-to-refrigerant heat exchanger 30, heat absorber 60, and heater core 50.

According to the in-vehicle air conditioning apparatus of Embodiment 2, during the heating operation, heat generated by compressor 41 is absorbed by the coolant sent to water-to-refrigerant heat exchanger 30 from heater core 50 on the way. Moreover, the heat is utilized when heater core 50 heats the air. Therefore, according to the in-vehicle air conditioning apparatus of Embodiment 2, it is possible to further improve the thermal efficiency of the heating operation.

The embodiments of the present invention have been described thus far.

In the above-described embodiments, specific configurations as the circuit of the refrigerant and the circuit of the coolant have been described by way of an example. However, the invention in which the compressor is integrated with the water-to-refrigerant heat exchanger is not limited to the circuits of the refrigerant and the coolant illustrated in the embodiments, and is useful for application to various circuits.

In the above-described embodiments, the configuration in which compressor 41 and water-to-refrigerant heat exchanger 30 are joined by jointing of the joint portion of the pipe has been described as an example, but various joint methods such as a method of jointing them together via a joint frame may be adopted.

The disclosure of the specification, drawings, and abstract in Japanese Patent Application No. 2012-071029 filed on March 27, 2012 is incorporated herein by reference in its entirety.

### Industrial Applicability

The present invention can be usefully applied to an in-vehicle air conditioning apparatus mounted in a vehicle.

### Reference Signs List

- 10: Outside heat exchanger
- 20: Orifice-provided solenoid valve
- 30: Water-to-refrigerant heat exchanger
- 34: First joint
- 35: Second joint
- 35b: Refrigerant passage
- 36: Base pipe
- 37: Thin pipe
- 41: Compressor
- 41a, 41b: Joint
- 42: Accumulator
- 43: On-off valve
- 46: Expansion valve
- 47: Fan
- 48: Evaporator
- 49, 53, 63: Pipe
- 50: Heater core
- 51: Cooling and heating switching door
- 52: Coolant pump
- 60: Heat absorber
- 62: Thermal insulation material
- 100, 100A: Integrated compression apparatus
- 200: Air passage

## Claims

1. An in-vehicle air conditioning apparatus comprising:
a compressor that compresses refrigerant of a heat pump;
an outside heat exchanger that exchanges heat between the refrigerant and air outside a vehicle interior;
a water-to-refrigerant heat exchanger that exchanges heat between the refrigerant and coolant by causing the refrigerant and the coolant to flow through an inside thereof;
a heat radiation section that releases heat into air from the coolant by causing the coolant to flow through an inside thereof;
a circulation section that circulates the coolant between the water-to-refrigerant heat exchanger and the heat radiation section; and
an air passage which sends air into the vehicle interior and in which the heat radiation section is disposed in midstream of the air passage, wherein
the compressor includes:
a send-out port that sends out the compressed refrigerant; and
an introduction port that is used for introducing refrigerant before compression, and
the water-to-refrigerant heat exchanger includes:
a first fitting section that is fitted to the send-out port of the compressor; and
a second fitting section that is fitted to the introduction port of the compressor, wherein:
the first fitting section includes an introduction path that is used for introducing the refrigerant sent out from the compressor into the water-to-refrigerant heat exchanger;
the second fitting section includes a refrigerant passage that is connected to the introduction port of the compressor at one end of the refrigerant passage and that includes a pipe connection port at another end of the refrigerant passage; and
the compressor and the water-to-refrigerant heat exchanger are integrally joined together by fitting of the first fitting section and the second fitting section.

2. The in-vehicle air conditioning apparatus according to claim 1, further comprising a thin pipe that is used for returning lubricating oil to the refrigerant passage of the second fitting section from a lower portion of a flow passage of the water-to-refrigerant heat exchanger for refrigerant.

3. An in-vehicle air conditioning apparatus comprising:
a compressor that compresses refrigerant of a heat pump;
an outside heat exchanger that exchanges heat between the refrigerant and air outside a vehicle interior;
a water-to-refrigerant heat exchanger that exchanges heat between the refrigerant and coolant by causing the refrigerant and the coolant to flow through an inside thereof;
a heat radiation section that releases heat into air from the coolant by causing the coolant to flow through an inside thereof;
a circulation section that circulates the coolant between the water-to-refrigerant heat exchanger and the heat radiation section; and
an air passage which sends air into the vehicle interior and in which the heat radiation section is disposed in midstream of the air passage, wherein
the compressor and the water-to-refrigerant heat exchanger are integrally joined together, and a send-out port of the compressor for refrigerant and an introduction port of the water-to-refrigerant heat exchanger for refrigerant are connected together.

4. The in-vehicle air conditioning apparatus according to claim 3, wherein the water-to-refrigerant heat exchanger is disposed above the compressor.

5. The in-vehicle air conditioning apparatus according to claim 4, wherein further comprising a thin pipe that is used for returning lubricating oil to a flow passage of the compressor for refrigerant from a lower portion of a flow passage of the water-to-refrigerant heat exchanger for refrigerant.

6. The in-vehicle air conditioning apparatus according to claim 5, further comprising an expansion section that expands the refrigerant, wherein, during heating operation, the refrigerant compressed by the compressor moves heat to the coolant in the water-to-refrigerant heat exchanger, and then is expanded in the expansion section, and thereafter, the refrigerant absorbs heat from air in the outside heat exchanger and returns to the compressor.

7. The in-vehicle air conditioning apparatus according to claim 5, further comprising a heat absorption section that causes the coolant to absorb heat generated by the compressor, by causing the coolant to flow through the heat absorption section, wherein the circulation section circulates the coolant among the water-to-refrigerant heat exchanger, the heat radiation section, and the heat absorption section.

8. A compression apparatus comprising:
a compressor that compresses refrigerant; and
a water-to-refrigerant heat exchanger that exchanges heat between the refrigerant and coolant by causing the refrigerant and the coolant to flow through an inside thereof, wherein
the water-to-refrigerant heat exchanger is disposed above the compressor and joined to the compressor, and a send-out port of the compressor for refrigerant is connected to an introduction port of the water-to-refrigerant heat exchanger for refrigerant.

9. The compression apparatus according to claim 8, wherein further comprising a thin pipe which is used for returning lubricating oil to a flow passage of the compressor for refrigerant from a lower portion of a flow passage of the water-to-refrigerant heat exchanger for refrigerant.

10. The compression apparatus according to claim 8, further comprising a heat absorption section that causes the coolant to absorb heat generated by the compressor, by causing the coolant to flow through the absorption section, wherein a pipe of the water-to-refrigerant heat exchanger for coolant is connected to a pipe of the heat absorption section for coolant.

11. An in-vehicle air conditioning unit apparatus comprising:
a compressor that compresses refrigerant of a heat pump;
a water-to-refrigerant heat exchanger that is disposed above the compressor and joined to the compressor, and that moves heat from the refrigerant to coolant by causing the coolant and the refrigerant compressed by the compressor to flow through an inside thereof; and
an accumulator that supplies gas-phase refrigerant to the compressor, wherein
the compressor, the water-to-refrigerant heat exchanger, and the accumulator are integrated into a single unit.

12. The in-vehicle air conditioning unit apparatus according to claim 11, wherein further comprising a thin pipe that is used for returning lubricating oil to a flow passage of the compressor for refrigerant from a lower portion of a flow passage of the water-to-refrigerant heat exchanger for refrigerant.

13. The in-vehicle air conditioning unit apparatus according to claim 11, further comprising a heat absorption section that causes the coolant to absorb heat generated by the compressor by causing the coolant to flow through an inside thereof, wherein:
a pipe of the water-to-refrigerant heat exchanger for coolant is connected to a pipe of the heat absorption section for coolant; and
the compressor, the water-to-refrigerant heat exchanger, the heat absorption section, and the accumulator are integrated into a unit.
